# EUROPÄISCHE PATENTSCHRIFT

(11) **EP 2 800 892 B1**
(45) Veröffentlichungstag und Bekanntmachung des Hinweises auf die Patenterteilung: **23.11.2016**
(21) Anmeldenummer: 12812972.3
(22) Anmeldetag: 20.12.2012
(51) Int. Cl.: F16K 11/20

(54) **MISCHVENTIL**
MIXING VALVE
VANNE DE MÉLANGE

(30) Priorität: 06.01.2012 DE 102012200170
(43) Veröffentlichungstag der Anmeldung: 12.11.2014
(73) Patentinhaber: Continental Automotive GmbH, 30165 Hannover (DE)
(72) Erfinder: SCHRÖDER, Lothar, 61184 Karben (DE)
(86) Internationale Anmeldenummer: PCT/EP2012/076525
(87) Internationale Veröffentlichungsnummer: WO 2013/102582

(56) Entgegenhaltungen:
- WO-A2-2011/102959
- US-A1- 2006 180 224
- US-B1- 7 552 722

## Beschreibung

Gegenstand der Erfindung ist ein Mischventil mit einem Gehäuse, in dem ein erster Strömungskanal und ein zweiter Strömungskanal angeordnet sind, wobei der zweite Strömungskanal in den ersten Strömungskanal einmündet und mit je einer Klappe, die zur Beeinflussung des Durchströmquerschnitts in dem jeweiligen Strömungskanal drehbar gelagert ist. Aus der US 7,552,722 B1 wird ein derartiges Mischventil bekannt.

Derartige Mischventile dienen zum Mischen zweier Gase oder zweier Flüssigkeiten und werden beispielsweise als Abgasmischventile in Kraftfahrzeugen eingesetzt. Hierzu ist es bekannt, den zweiten Strömungskanal in einem Winkel von 90° oder kleiner in den ersten Strömungskanal einmünden zulassen. Sofern ein Strom dominierend ist, wird dieser meist im ersten Strömungskanal geführt und der zweite Strom wird über den einmündenden zweiten Strömungskanal zugeführt. Dabei hat sich gezeigt, dass die Durchmischung der beiden Ströme bis zum Verlassen des Gehäuses oftmals nicht vollständig ist, beziehungsweise dass hierfür eine längere Strömungsstrecke benötigt wird. Das trifft insbesondere dann zu, wenn der dominierende Strom mit einer hohen Geschwindigkeit strömt. Dieser Nachteil lässt sich durch Verwirbelungselemente abschwächen. Allerdings wird dadurch der Strömungswiderstand erhöht.

Der Erfindung liegt daher die Aufgabe zugrunde, ein Mischventil zu schaffen, welches eine gute Durchmischung zweier Fluide bei möglichst geringem Bauraum ermöglicht, ohne den Strömungswiderstand zu erhöhen.

Erfindungsgemäß wird die Aufgabe dadurch gelöst, dass der erste Strömungskanal in Strömungsrichtung gesehen nach der Einmündung des zweiten Strömungskanals einen Bereich mit mindestens zwei Querschnittserweiterungen aufweist und dass in diesem Bereich mindestens ein in den Strömungskanal hineinragendes, feststehendes Leitelement angeordnet ist.

Es hat sich gezeigt, dass in den Strömungskanal hineinragende Leitelemente eine verbesserte Vermischung der Fluide bewirkt. Die gleichzeitige Querschnittserweiterung des Strömungskanals verhindert dabei, dass sich der Strömungswiderstand durch die Anordnung der Leitelemente erhöht. Zudem hat die Querschnittserweiterung infolge ihrer Beeinflussung der Strömungsrichtung einen zusätzlichen Mischeffekt auf die beiden Fluide.

Ein besonders großer zusätzlicher Mischeffekt wird dadurch erreicht, dass die Querschnittserweiterungen symmetrisch über den Umfang des Strömungskanals angeordnet sind. Insbesondere bei zwei Querschnittserweiterungen sind diese einander gegenüberliegend angeordnet. Dies trifft in einer anderen Ausgestaltung gleichermaßen auf die Leitelemente zu, welche ebenso symmetrisch über den Umfang des Strömungskanals angeordnet sind und dabei vorteilhafterweise jeweils einander gegenüberliegen.

Die größtmögliche Vermischung bei gleichzeitiger Vermeidung von zusätzlichen Strömungswiderständen wird mit einer Ausgestaltung erreicht, bei der die Leitelemente, bezogen auf den Umfang des Strömungskanals, versetzt zu den Querschnittserweiterungen angeordnet sind.

Die Leitelemente können senkrecht zur Hauptströmungsrichtung angeordnet sein, wobei sie zur Vermeidung zu großer Strömungswiderstände nur eine geringe radiale Erstreckung aufweisen. Eine Vergrößerung der Durchmischung der Fluide ohne Zunahme des Strömungswiderstandes wird dagegen mit einer Ausgestaltung erreicht, bei der die Leitelemente in einem von der Senkrechten zur Haupströmungsrichtung abweichenden Winkel, vorzugsweise zwischen 30° und 60°, angeordnet sind. Durch die winklige Anordnung ist die projizierte Erstreckung der Leitbleche senkrecht zur Haupströmungsrichtung kleiner als ihre eigentliche Länge. Allerdings besitzen die Leitbleche dadurch auch eine projizierte Erstreckung in Strömungsrichtung, so dass sie über einen längeren Zeitraum mit den Fluiden in Kontakte sind und deren Strömungsverlauf beeinflussen können. Die Leitelemente können dabei sowohl in Strömungsrichtung weisend als auch entgegen der Strömungsrichtung weisend angeordnet sein.

Die Herstellbarkeit des Gehäuses vereinfacht sich, wenn das Gehäuse aus zwei Teilen besteht und die Trennebene der beiden Teile in dem Bereich der Querschnittserweiterung liegt. Dies ermöglicht die Herstellung des Gehäuses aus Metall mittels Gießen oder aus Kunststoff mittels Spritzgießen. Es ist aber auch denkbar, die Querschnittserweiterungen bei einem Kunststoffgehäuse mit einem Gasinnendruckverfahren zu erzeugen, so dass das Gehäuse einteilig ausgeführt werden kann.

Die Verbindung der beiden Teile des Gehäuses erfolgt in einer einfachen Ausgestaltung über eine Flanschverbindung, indem die beiden Teile an ihrer Trennebene einen an das jeweilige Gehäuseteil angeformten Flansch aufweisen.

Eine separate Montage des zumindest einen Leitelements kann entfallen, wenn das Leitelement einteilig mit einem Gehäuseteil ausgebildet ist.

Die Herstellbarkeit der Leitelemente und des zumindest einen Gehäuseteils wird dagegen vereinfacht, wenn das mindestens eine Leitelement als separates Bauteil in dem Bereich des ersten Strömungskanals angeordnet ist. Das zumindest eine Leitelement besitzt dazu einen ringförmigen Träger, der in den Bereich mit den Querschnittserweiterungen eingelegt wird. Dieser Träger kann sowohl axial als auch radial festgelegt sein, indem seine axiale Länge der Länge des Bereiches der Querschnittserweiterungen entspricht, sein Umfang der Kontur des Bereiches der Querschnittserweiterungen entspricht, oder mittels Presspassung in den Bereich der Querschnittserweiterungen eingesetzt ist.

In einer anderen Ausgestaltung ist der ringförmige Träger als Zwischenflansch gestaltet, der zwischen die beiden Flansche der Gehäuseteile eingesetzt wird.

An mehreren Ausführungsbeispielen wird die Erfindung näher erläutert. Es zeigen:
- Fig. 1: einen Schnitt durch ein erfindungsgemäßes Mischventil,
- Fig. 2: eine Seitenansicht der Fig. 1,
- Fig. 3: eine Draufsicht der Fig. 1 und
- Fig. 4, 5: zwei schematische Ausführüngsformen der Anordnung der Leitelemente.

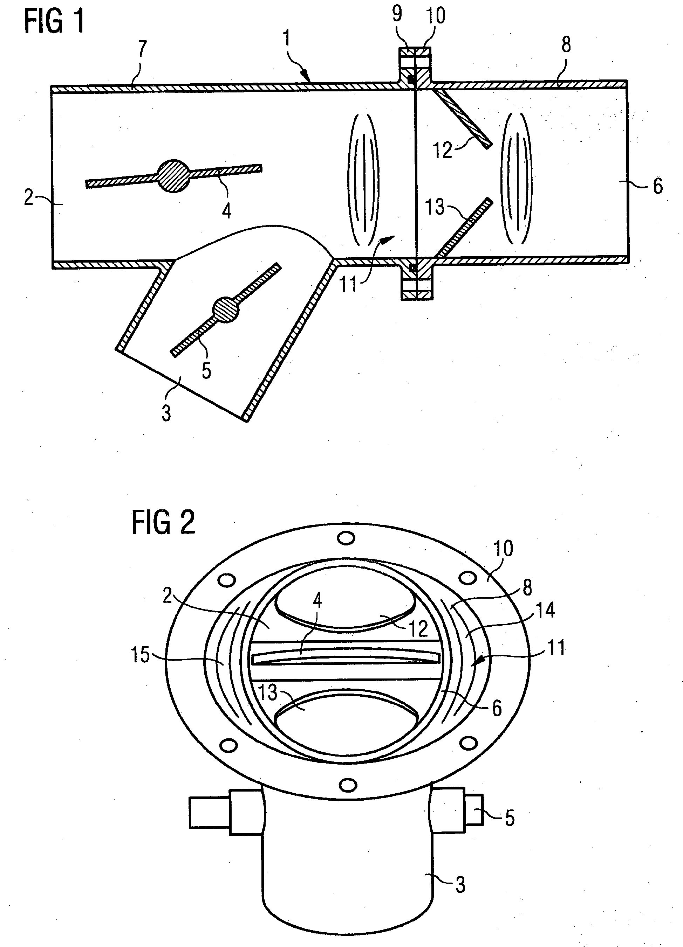

Das Mischventil in Fig. 1 ist ein Abgas-Mischventil in einem Kraftfahrzeug. Es besteht aus einem Gehäuse 1, in dem ein erster Strömungskanal 2 und ein zweiter Strömungskanal 3 angeordnet sind, wobei der zweite Strömungskanal 3 in den ersten Strömungskanal 2 einmündet und mit je einer Klappe 4, 5, die zur Beeinflussung des Durchströmquerschnitts in dem jeweiligen Strömungskanal drehbar gelagert ist. Der Antrieb und die Steuerung der Klappen 4, 5 zur Regelung der Durchflussmenge sind nicht dargestellt. In dem ersten Strömungskanal 2 strömt Frischluft als dominierendes Gas. Über den Strömungskanal 3 wird heißes Abgas zugeführt, um dieses mit der Frischluft zu mischen, bevor dieses Gemisch am Auslass 6 des ersten Strömungskanals 2 einem nicht dargestellten Turbolader zugeführt wird. Dabei kommt es auf eine möglichst gute Durchmischung der Frischluft mit dem Abgas an, um zu verhindern, dass der Turbolader durch das heiße Abgas infolge einer unzureichenden Vermischung geschädigt wird. Das Gehäuse 1 besteht aus den Gehäuseteile 7, 8, die jeweils über einen Flansch 9, 10 miteinander verbunden sind. In dieser Trennebene des Gehäuses 1 ist ein Bereich 11 mit Querschnittserweiterungen angeordnet, der sich in beide Gehäuseteile 7, 8 erstreckt und auf dessen Ausgestaltung in den nachfolgenden Figuren eingegangen wird. Im Strömungskanal 2 des Gehäuseteils 8 sind zwei Leitelemente 12, 13 in einem um 45° von der Senkrechten zur Haupströmungsrichtung im ersten Strömungskanal 2 abweichenden Winkel angeordnet. Die beiden Leitelemente 12, 13 sind einteilig mit dem Gehäuseteil 8 hergestellt, einander gegenüberliegend und somit symmetrisch am Umfang des Bereichs 11 angeordnet.

Fig. 2 zeigt eine Seitenansicht des Mischventils mit Blick in den Auslass 6 des Mischventils. Während der Auslass 6 einen runden Querschnitt aufweist, besitzt der Bereich 11 zwei sichelförmige Querschnittserweiterungen 14, 15, die einander gegenüberliegend angeordnet sind, so dass der Bereich 11 insgesamt einen elliptischen Querschnitt erhält. Die Querschnittserweiterungen 14, 15 sind am Umfang des Bereich 11 um 90° versetzt zu den Leitelementen 12, 13 angeordnet. Mit den Querschnittserweiterungen wird den strömenden Gasen zusätzlicher Raum bereitgestellt, um so den Strömungswiderstand der im Bereich 11 angeordneten Leitelemente zu kompensieren. Allerdings beeinflusst diese Umlenkung den Strömungsverlauf, was wiederum die Durchmischung erhöht. Die Leitelemente 12, 13 besitzen eine ellipsenförmige Gestalt. Es ist aber auch denkbar, die Leitelemente kreisförmig, oder als Polygon zu gestalten.

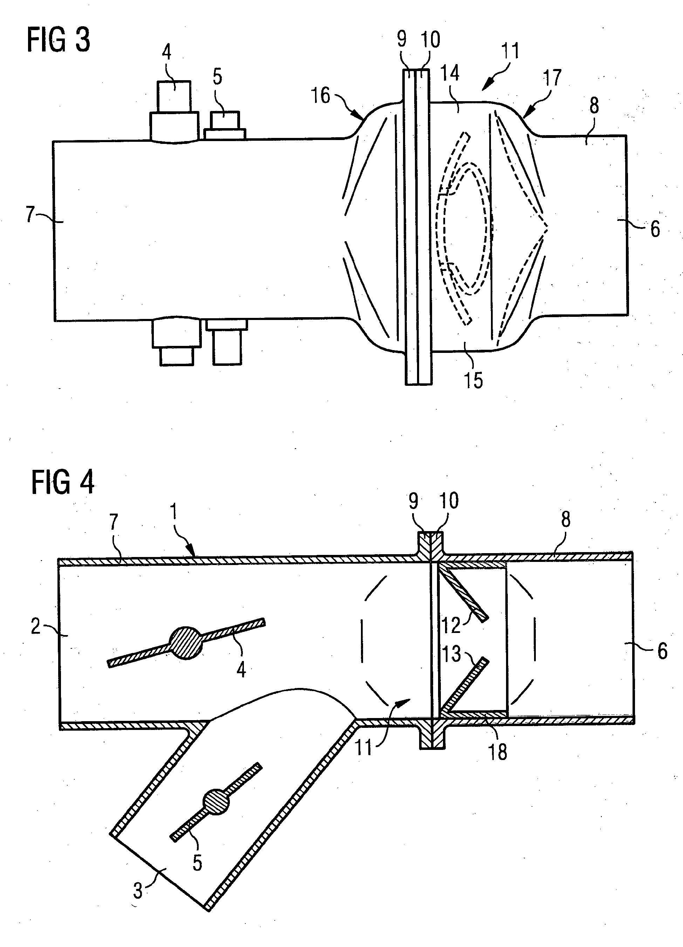

In Fig. 3 ist das Mischventil in einer Ansicht von oben dargestellt, bei der der Bereich 11 mit den Querschnittserweiterungen 12, 13 aufgrund der um 90° versetzten Anordnung zu den Leitelementen deutlich erkennbar ist. Um eine zu starke Beeinflussung der strömenden Gase zu vermeiden, sind die Übergänge 16, 17 des ersten Strömungskanals 2 zum Bereich 11 abgerundet, das bedeutet stetig verlaufend und somit ohne Absätze ausgeführt.

Fig. 4 zeigt den Bereich 11, in dem die Leitelemente 12, 13 angeordnet sind. Die Leitelemente 12,13 sind als separates Bauteil in dem Bereich 11 eingebracht, wobei die Leitelemente 12, 13 einteilig mit einem ringförmigen Träger 18 verbunden sind. Der Außendurchmesser des Trägers 18 ist größer als der Innendurchmesser des ersten Strömungskanals 2, so dass der Träger 18 im Bereich der Leitelemente 12, 13 mittels Presspassung im ersten Strömungskanal 2 axial und radial fixiert ist.

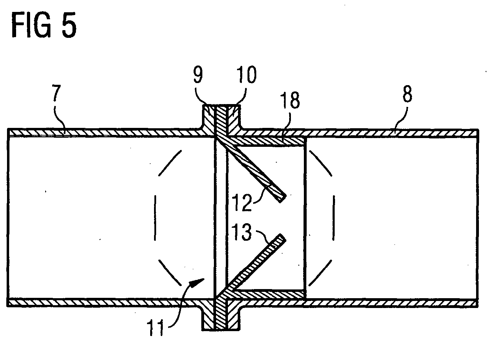

Nach Fig. 5 ist der Träger 18 mit den Leitelementen 12, 13 nicht im Strömungskanal sondern in der Trennebene des Gehäuses 1 fixiert, indem er als Zwischenflansch ausgebildet, zwischen den Flanschen 9, 10 angeordnet ist.

## Patentansprüche

1. Mischventil mit einem Gehäuse, in dem ein erster Strömungskanal und ein zweiter Strömungskanal angeordnet sind, wobei der zweite Strömungskanal in den ersten Strömungskanal einmündet und mit je einer Klappe, die zur Beeinflussung des Durchströmquerschnitts in dem jeweiligen Strömungskanal drehbar gelagert ist, **dadurch gekennzeichnet, dass** der erste Strömungskanal (2) in Strömungsrichtung gesehen nach der Einmündung des zweiten Strömungskanals (3) einen Bereich (11) mit mindestens zwei Querschnittserweiterungen (14, 15) aufweist und dass in diesem Bereich (11) mindestens ein in den Strömungskanal (2) hineinragendes, feststehendes Leitelement (12, 13) angeordnet ist.

2. Mischventil nach Anspruch 1, **dadurch gekennzeichnet, dass** die Querschnittserweiterungen (14, 15) symmetrisch über den Umfang des ersten Strömungskanals (2) angeordnet sind.

3. Mischventil nach Anspruch 2, **dadurch gekennzeichnet, dass** die Leitelemente (12, 13) symmetrisch über den Umfang des ersten Strömungskanals (2) angeordnet sind.

4. Mischventil nach Anspruch 3, **dadurch gekennzeichnet, dass** die Leitelemente (12, 13) bezogen auf den Umfang des ersten Strömungskanals (2) versetzt zu den Querschnittserweiterungen (14, 15) angeordnet sind.

5. Mischventil nach zumindest einem der vorhergehenden Ansprüche, **dadurch gekennzeichnet, dass** das mindestens eine Leitelement (12, 13) in einem von der Senkrechten zur Haupströmungsrichtung abweichenden Winkel, vorzugsweise zwischen 30° und 60°, angeordnet ist.

6. Mischventil nach zumindest einem der Ansprüche 1 bis 5, **dadurch gekennzeichnet, dass** das Gehäuse (1) aus zwei Teilen (7, 8) besteht und die Trennebene der beiden Teile (7, 8) in dem Bereich der Querschnittserweiterung (14, 15) liegt.

7. Mischventil nach Anspruch 6, **dadurch gekennzeichnet, dass** die beiden Teile (7, 8) mittels einer Flanschverbindung (9, 10) verbunden sind.

8. Mischventil nach zumindest einem der vorhergehenden Ansprüche, **dadurch gekennzeichnet, dass** das mindestens eine Leitelement (12, 13) einteilig mit einem Gehäuseteil (7, 8) ausgebildet ist.

9. Mischventil nach zumindest einem der vorhergehenden Ansprüche 1 bis 7, **dadurch gekennzeichnet, dass** das mindestens eine Leitelement (12, 13) als separates Bauteil (18) in dem Bereich (11) des ersten Strömungskanals (2) angeordnet ist.

10. Mischventil nach Anspruch 9, **dadurch gekennzeichnet, dass** das mindestens eine Leitelement (12, 13) einteilig mit einem Träger verbunden ist, der in den ersten Strömungskanal (2) eingesetzt ist.

## Claims

1. Mixing valve with a housing, in which a first flow duct and a second flow duct are arranged, the second flow duct issuing into the first flow duct, and in each case with a flap which is mounted rotatably in the respective flow duct in order to influence the throughflow cross section, **characterized in that** the first flow duct (2) has downstream of the issue of the second flow duct (3), as seen in the flow direction, a region (11) with at least two cross-sectional widenings (14, 15), and **in that** at least one stationary guide element (12, 13) projecting into the flow duct (2) is arranged in this region (11).

2. Mixing valve according to Claim 1, **characterized in that** the cross-sectional widenings (14, 15) are arranged symmetrically over the circumference of the first flow duct (2).

3. Mixing valve according to Claim 2, **characterized in that** the guide elements (12, 13) are arranged symmetrically over the circumference of the first flow duct (2).

4. Mixing valve according to Claim 3, **characterized in that** the guide elements (12, 13) are arranged so as to be offset to the cross-sectional widenings (14, 15) with respect to the circumference of the first flow duct (2).

5. Mixing valve according to at least one of the preceding claims, **characterized in that** the at least one guide element (12, 13) is arranged at an angle deviating from the perpendicular to the main flow direction, preferably of between 30° and 60°.

6. Mixing valve according to at least one of Claims 1 to 5, **characterized in that** the housing (1) is composed of two parts (7, 8), and the parting plane of the two parts (7, 8) lies in the region of the cross-sectional widening (14, 15).

7. Mixing valve according to Claim 6, **characterized in that** the two parts (7, 8) are connected by means of a flange connection (9, 10).

8. Mixing valve according to at least one of the preceding claims, **characterized in that** the at least one guide element (12, 13) is formed in one part with a housing part (7, 8).

9. Mixing valve according to at least one of the preceding Claims 1 to 7, **characterized in that** the at least one guide element (12, 13) is arranged as a separate component (18) in the region (11) of the first flow duct (2).

10. Mixing valve according to Claim 9, **characterized in that** the at least one guide element (12, 13) is connected in one part to a carrier which is inserted into the first flow duct (2).

## Revendications

1. Soupape de mélange comprenant un boîtier dans lequel sont disposés un premier canal d'écoulement et un deuxième canal d'écoulement, le deuxième canal d'écoulement débouchant dans le premier canal d'écoulement et comprenant à chaque fois un clapet qui est supporté à rotation dans le canal d'écoulement respectif pour influencer la section transversale d'écoulement, **caractérisée en ce que** le premier canal d'écoulement (2), vu dans la direction d'écoulement, présente après l'embouchure du deuxième canal d'écoulement (3), une région (11) ayant au moins deux élargissements de section transversale (14, 15) et **en ce que** dans cette région (11) est disposé au moins un élément directeur (12, 13) fixe, pénétrant dans le canal d'écoulement (2).

2. Soupape de mélange selon la revendication 1, **caractérisée en ce que** les élargissements de section transversale (14, 15) sont disposés symétriquement sur la périphérie du premier canal d'écoulement (2).

3. Soupape de mélange selon la revendication 2, **caractérisée en ce que** les éléments directeurs (12, 13) sont disposés symétriquement sur la périphérie du premier canal d'écoulement (2).

4. Soupape de mélange selon la revendication 3, **caractérisée en ce que** les éléments directeurs (12, 13) sont disposés de manière décalée par rapport aux élargissements de section transversale (14, 15) par rapport à la périphérie du premier canal d'écoulement (2).

5. Soupape de mélange selon au moins l'une quelconque des revendications précédentes, **caractérisée en ce que** l'au moins un élément directeur (12, 13) est disposé suivant un angle s'écartant de la verticale par rapport à la direction d'écoulement principale, de préférence compris entre 30° et 60°.

6. Soupape de mélange selon au moins l'une quelconque des revendications 1 à 5, **caractérisée en ce que** le boîtier (1) se compose de deux parties (7, 8) et le plan de séparation des deux parties (7, 8) est situé dans la région de l'élargissement de section transversale (14, 15).

7. Soupape de mélange selon la revendication 6, **caractérisée en ce que** les deux parties (7, 8) sont connectées au moyen d'une connexion par bride (9, 10).

8. Soupape de mélange selon au moins l'une quelconque des revendications précédentes, **caractérisée en ce que** l'au moins un élément directeur (12, 13) est réalisé d'une seule pièce avec une partie de boîtier (7, 8).

9. Soupape de mélange selon au moins l'une quelconque des revendications précédentes 1 à 7, **caractérisée en ce que** l'au moins un élément directeur (12, 13) est disposé en tant que composant séparé (18) dans la région (11) du premier canal d'écoulement (2).

10. Soupape de mélange selon la revendication 9, **caractérisée en ce que** l'au moins un élément directeur (12, 13) est connecté d'une seule pièce à un support qui est inséré dans le premier canal d'écoulement (2).
